# EUROPÄISCHE PATENTSCHRIFT

(11) **EP 3 154 750 B1**
(45) Veröffentlichungstag und Bekanntmachung des Hinweises auf die Patenterteilung: **10.10.2018**
(21) Anmeldenummer: 15730721.6
(22) Anmeldetag: 10.06.2015
(51) Int. Cl.: B25J 11/00, B25J 15/00, B25J 19/00

(54) **ROBOTER ZUR HANDHABUNG VON TRANSPORTGÜTERN UND REINIGUNGSEINRICHTUNG HIERFÜR SOWIE BETRIEBSVERFAHREN ZUM BETRIEB EINES ROBOTERS**
ROBOT FOR HANDLING GOODS IN TRANSIT AND CLEANING DEVICE THEREFOR AND OPERATING METHOD FOR OPERATING A ROBOT
ROBOT DE MANUTENTION DE PRODUITS À TRANSPORTER, DISPOSITIF DE NETTOYAGE D'UN TEL ROBOT AINSI QUE PROCÉDÉ DE FONCTIONNEMENT D'UN ROBOT

(30) Priorität: 13.06.2014 DE 102014211397
(43) Veröffentlichungstag der Anmeldung: 19.04.2017
(73) Patentinhaber: IPR-Intelligente Peripherien für Roboter GmbH, 75031 Eppingen (DE)
(72) Erfinder: DOLL, Theo, 74193 Schwaigern (DE)
(74) Vertreter: Patentanwaltskanzlei Cartagena
(86) Internationale Anmeldenummer: PCT/EP2015/062979
(87) Internationale Veröffentlichungsnummer: WO 2015/189293

(56) Entgegenhaltungen:
- EP-A1- 1 167 202
- WO-A1-2010/047595
- DE-A1-102011 003 303

## Beschreibung

Die Erfindung betrifft einen Roboter zur Handhabung von Transportgütern, insbesondere zur Zusammenstellung von Transportgütern zu einer gemeinsamen Liefercharge auf einer Palette nach Anspruch 1. Die Erfindung betrifft weiterhin auch eine Reinigungseinrichtung nach dem Oberbegriff von Anspruch 7 für einen erfindungsgemäßen Roboter sowie ein Reinigungsverfahren nach dem Oberbegriff von Anspruch 10.

Ein gattungsgemäßer Roboter verfügt über mindestens eine bewegliche Zinkeneinheit mit mindestens einem Auflagezinken und mindestens einer Zinkenbasis, gegenüber der der mindestens eine Auflagezinken translativ verfahrbar ist.

Die Erfindung betrifft weiterhin auch eine Reinigungseinrichtung für einen solchen Roboter.

Ein gattungsgemäßer Roboter ist aus dem Stand der Technik bekannt, insbesondere aus der WO 2010/047595 A1. Die vorliegende Erfindung betrifft insbesondere die Weiterbildung eines solchen Roboters, wie er aus der genannten Schrift bekannt ist. Der Offenbarungsgehalt der WO 2010/047595 A1 wird daher durch explizite Bezugnahme zum Offenbarungsgehalt dieser Anmeldung gemacht, soweit er den Roboter und seine zum Zusammenstellen von Transportgütern vorhandenen mechanischen Komponenten betrifft.

Gattungsgemäße Roboter dienen der Handhabung von Transportgütern, insbesondere zum Zwecke, eine Vielzahl einzelner und zum Teil unterschiedlicher Transportgüter zu einer gemeinsamen Charge auf einer Palette zusammenzufassen. Dies betrifft insbesondere Lebensmittel und Getränke.

Durch den gattungsgemäßen Roboter gemäß der WO 2010/047595 A1 sowie durch anders gestaltete Roboter ist es möglich, mit hoher Präzision und hoher Geschwindigkeit Paletten mit einheitlichen oder unterschiedlichen Transportgütern zu bestücken. Es ist jedoch in der Praxis kaum vermeidbar, dass es hierbei auch zu Beschädigungen der Transportgüter kommt. Im Falle der Beschädigung kann es dazu kommen, dass der Inhalt der beschädigten Transportgüter, insbesondere Lebensmittel, in Kontakt mit der Mechanik des Robotergreifers kommt und Störungen verursacht. Dies gilt insbesondere für stark zuckerhaltige Getränke, welche beim Trocknen einen Zuckerfilm hinterlassen, durch den insbesondere die Beweglichkeit des Auflagezinkens gegenüber der Zinkenbasis gestört wird.

Aus der DE 102011003303 A1 ist es bekannt, ein Roboterwerkzeug in einer Reinigungskammer zu reinigen. Zum Zwecke der Innenreinigung kann dabei vorgesehen sein, dass Reinigungsflüssigkeit durch den Roboterarm dem in der Reinigungskammer befindlichen Roboterwerkzeug zugeführt wird.

### AUFGABE UND LÖSUNG

Aufgabe der Erfindung ist es, einen gattungsgemäßen Roboter dahingehend weiterzubilden, dass eine Innenreinigung in vorteilhafter Weise möglich ist.

Es wird vorgeschlagen, dass ein gattungsgemäßer Roboter mit einer Reinigungseinrichtung versehen ist. Diese Reinigungseinrichtung umfasst eine gegenüber einer Umgebung isolierbare Reinigungskammer, die zur vollständigen Aufnahme des Auflagezinkens und zur zumindest teilweisen Aufnahme der Zinkenbasis ausgebildet ist. Die Reinigungseinrichtung umfasst weiterhin eine Zuführöffnung, durch die hindurch die Zinkeneinheit zumindest teilweise in die Reinigungskammer eingeführt werden kann, sowie mindestens eine in die Reinigungskammer mündende Einströmöffnung für Reinigungsflüssigkeit.

Es ist also vorgesehen, eine Reinigungseinrichtung zur Verfügung zu stellen, die ohne Demontage des Roboters oder von Teilen hiervon und vorzugsweise auch ohne menschlichen Eingriff eine eingetretene Störungssituation schnell beseitigen kann. Die Reinigungseinrichtung ist dafür vorgesehen, alleine mit den Freiheitsgraden, die der Roboter zur Bewegung der Zinkeneinheit aufweist, eine Überführung der Zinkeneinheit in die Reinigungskammer zu ermöglichen. Hierfür ist die Reinigungskammer mit der genannten Zuführöffnung ausgestattet, durch die hindurch der Roboter die Zinkeneinheit in die Reinigungskammer bewegen kann. Die Reinigungseinrichtung weist weiterhin Mittel auf, um bei Anordnung der Zinkeneinheit oder zumindest eines Teiles hiervon in der Reinigungskammer diese gegenüber einer Umgebung zu isolieren, so dass anschließend Reinigungsflüssigkeit zugeführt werden kann, die die Verunreinigungen von der Zinkeneinheit beseitigen kann. Von Vorteil ist es, wenn die Zuführöffnung nach oben weist, so dass der Roboter durch Absenken der Zinkeneinheit diese zumindest teilweise im Reinigungsraum anordnen kann.

Zum Isolieren der Reinigungskammer gegenüber einer Umgebung verfügt die Reinigungseinrichtung vorzugsweise über ein Schließelement in Art eines Deckels oder dergleichen. Dieses Schließelement, von dem vorzugsweise mehrere, insbesondere zwei, vorgesehen sind, ist dafür ausgebildet, motorisch zwischen einer Öffnungsstellung und einer Schließstellung verfahrbar zu sein. In der Schließstellung des Schließelements oder der mehreren Schließelemente isolieren diese die Reinigungskammer, wobei sie hierfür die Zuführöffnung vorzugsweise gemeinsam mit der Zinkenbasis verschließen. Hierunter ist zu verstehen, dass das Schließelement oder die Schließelemente, gegebenenfalls gemeinsam mit einer die Zuführöffnung umgebenden Kante, eine Aussparung definieren, die hinsichtlich ihrer Form an die Zinkenbasis oder ein anderweitiges Teil des Roboters angepasst ist, so dass gemeinsam mit einer Außenkontur der Zinkenbasis oder des genannten anderweitigen Teils die Zuführöffnung ausreichend dicht verschließbar ist, um das Austreten größerer Mengen von Reinigungsflüssigkeit wirksam zu verhindern.

Besonders von Vorteil ist es, wenn an der Außenseite der Zinkenbasis eine Nut oder ein nach außen weisender Steg vorgesehen ist, der formschlüssig mit dem Schließelement zusammenwirkt, wenn dieses in seiner Schließstellung ist. Hierdurch werden eine zusätzliche Fixierung der Zinkeneinheit in ihrer Reinigungsposition und eine besonders gute Form der Abdichtung der Reinigungskammer erzielt.

Die Zinkenbasis eines erfindungsgemäßen Roboters ist jene Baugruppe, gegenüber der der mindestens eine Auflagezinken translativ verfahrbar ist. Innerhalb dieser Zinkenbasis sind mechanische Komponenten vorgesehen, die geeignet sind, den Auflagezinken bei seiner translativen Bewegung gegenüber der Zinkenbasis anzutreiben. Insbesondere im Bereich dieser mechanischen Komponenten, wie Zahnräder und Linearverzahnungen, ist die eingangs genannte Verschmutzung problematisch. Um zu erreichen, dass insbesondere hier eine große Reinigungswirkung durch den Zufluss von Reinigungsflüssigkeit bewirkt wird, ist es von Vorteil, wenn die Zinkenbasis ein Gehäuse mit einer Eingangsöffnung aufweist, durch die hindurch Reinigungsflüssigkeit von außen in einen Innenraum der Zinkenbasis gelangen kann. Das so ausgebildete Gehäuse der Zinkenbasis hat also einen speziellen Zugang, um die Reinigungsflüssigkeit von außen unmittelbar an besonders reinigungsbedürftige Stellen zu führen.

Damit es möglich ist, hier Reinigungsflüssigkeit unter Druck einströmen zu lassen, ist erfindungsgemäß mindestens eine der Einströmöffnungen der Reinigungskammer derart in der Reinigungskammer angeordnet oder anordenbar, dass sie an die Eingangsöffnung der Zinkenbasis ankoppelbar ist. Die genannte Einströmöffnung gelangt somit beim Einführen der Zinkeneinheit in die Reinigungskammer oder nach Einführen der Zinkeneinheit in die Reinigungskammer in eine gekoppelte Verbindung mit der Eingangsöffnung der Zinkenbasis. Hierfür ist vorzugsweise an der genannten Einströmöffnung oder an der Eingangsöffnung der Zinkenbasis ein umlaufender Dichtungsring vorgesehen, durch den es möglich wird, alleine durch das Anlegen der Einströmöffnung der Reinigungskammer an die Eingangsöffnung der Zinkenbasis eine nach außen dichte Strömungsverbindung zu schaffen.

Eine besonders einfache Möglichkeit zur Realisierung der genannten unmittelbaren Verbindung liegt darin, die genannte Einströmöffnung ortsfest derart in der Reinigungskammer zu platzieren, dass alleine durch das Zuführen der Zinkeneinheit die Verbindung geschaffen wird. Dies kann beispielsweise dadurch erreicht werden, dass die genannte Einströmöffnung der Zuführöffnung der Reinigungseinrichtung gegenüberliegend angeordnet ist. Ist die Zuführöffnung an der Oberseite der Reinigungseinrichtung vorgesehen, so kann die genannte Einströmöffnung von unten in die Reinigungskammer münden und mit einer an der Unterseite der Zinkenbasis vorgesehenen Eingangsöffnung in Kontakt gebracht werden, wenn die Zinkeneinheit in die Reinigungskammer eingefahren wird.

Eine zusätzliche oder alternative Gestaltung der Einströmöffnung zum Zusammenwirken mit der Eingangsöffnung der Zinkenbasis sieht vor, dass die genannte Einströmöffnung gegenüber der Reinigungskammer verfahrbar ist, also nach Zuführen der Zinkeneinheit in die Reinigungskammer auf die Zinkenbasis zufährt, um hieran anzukoppeln bzw. sich hieran anzulegen. Eine besonders vorteilhafte Realisierung dessen sieht vor, dass die Einströmöffnung zur Schließeinheit ortsfest ist und gemeinsam mit dieser gegenüber der Reinigungskammer und der in der Reinigungskammer angeordneten Zinkeneinheit verfahrbar ist. Eine solche Gestaltung gestattet es, nach Einführen der Zinkeneinheit in die Reinigungskammer beim Schließen der Zuführöffnung gleichzeitig die Fluidverbindung zwischen der Einströmöffnung der Reinigungskammer und der Eingangsöffnung der Zinkenbasis zu schaffen. Eine einfache Bauweise der Reinigungseinrichtung kann hierdurch erzielt werden.

Es wurde festgestellt, dass die Reinigungswirkung erhöht werden kann, wenn die bestimmungsgemäße Relativbewegung zwischen Auflagezinken und Zinkenbasis auch in der Reinigungskammer möglich ist. Daher ist die Reinigungskammer vorzugsweise derart auf die Zinkeneinheit angepasst, dass der Zinken auch innerhalb der Reinigungskammer verfahrbar ist, vorzugsweise mindestens um 5 cm. Besonders von Vorteil ist es, wenn die Reinigungskammer derart ausgebildet ist, dass der Auflagezinken zwischen einer vorderen und einer hinteren Endlage innerhalb der Reinigungskammer bei feststehender Zinkenbasis beweglich ist.

Im Hinblick auf die Steuerung des Roboters und der Reinigungsvorgänge kann vorgesehen sein, dass eine Steuereinrichtung des Roboters ohne explizite Bedarfserkennung regelmäßig einen Reinigungsvorgang initiiert, indem die Zinkeneinheiten in festem oder betriebsabhängigem Takt der Reinigungseinrichtung zugeführt werden. Von Vorteil ist es jedoch, wenn eine solche Reinigung zwar automatisch, jedoch bedarfsabhängig, erfolgt. Es ist daher von Vorteil, wenn ein erfindungsgemäßer Roboter über eine Sensorik verfügt, durch die unmittelbar oder mittelbar Feuchtigkeit erfasst werden kann. Diese Sensorik kann insbesondere einen Feuchtigkeitssensor umfassen, der im Bereich der Zinkeneinheit und insbesondere vorzugsweise an der Zinkenbasis vorgesehen ist. Wenn über diesen Feuchtigkeitssensor Feuchtigkeit jenseits eines vorgegebenen Schwellwertes ermittelt wird, so wird ein Reinigungsvorgang mit der erfindungsgemäß vorgesehenen Reinigungseinrichtung initiiert. Statt eines expliziten Sensors kann auch die Motorsteuerung des Roboters verwendet werden. Die erhöhte Reibung, die bei einer Verschmutzung eintritt, kann durch Überwachung der Motorenströme erkannt werden und ebenfalls für die Bedarfsermittlung hinsichtlich einer Reinigung herangezogen werden.

Um den Reinigungsvorgang mit hoher Geschwindigkeit durchführen und abschließen zu können, ist es von Vorteil, wenn die Reinigungseinrichtung weiterhin auch über eine Trocknungseinrichtung verfügt. Diese ist vorzugsweise derart ausgebildet, dass sie über in die Reinigungskammer einströmende Luft die Trocknung bewirkt. Besonders von Vorteil ist es, wenn hierbei dieselben Einströmöffnungen Verwendung finden, die zuvor der Zuführung von Reinigungsflüssigkeit gedient haben.

Während der Trocknung ist die bereits genannte Beweglichkeit des Auflagezinkens gegenüber der Zinkenbasis von Vorteil. Durch gleichzeitiges Zuströmen von Luft und Bewegen der Auflagezinken ist es möglich, alle Teile der Zinkeneinheit in kurzer Dauer zu trocknen.

Die Erfindung betrifft weiterhin auch eine Reinigungseinrichtung für einen Roboter oben beschriebener Art. Diese Reinigungseinrichtung umfasst die eingangs genannten erfindungsgemäß vorgesehenen Komponenten der Reinigungskammer samt Zuführöffnung sowie der Einströmöffnung für Reinigungsflüssigkeit.

Die Reinigungseinrichtung verfügt vorzugsweise über das bereits genannte Schließelement zum Verschließen der Zuführöffnung, wobei dieses zwischen einer Öffnungsstellung und einer Schließstellung motorisch verfahrbar ist. Insbesondere vorteilhaft ist es, wenn mindestens eine Einströmöffnung gegenüber der Reinigungskammer verfahrbar ist, wobei sie insbesondere vorzugsweise zu diesem Zweck ortsfest mit der Schließeinheit verbunden ist und gemeinsam mit dieser gegenüber der Reinigungskammer verfahrbar ist.

Die Erfindung betrifft weiterhin auch ein Verfahren zum Reinigen einer beweglichen Zinkeneinheit eines Roboters. Hierbei ist erfindungsgemäß vorgesehen, dass die Reinigung unter Nutzung einer Fluidverbindung erfolgt, die beim oder nach der Einführung der Zinkeneinheit in die Reinigungskammer zwischen einer Einströmöffnung der Reinigungskammer und einer Eingangsöffnung der Zinkenbasis geschaffen wird.

Die Reinigung erfolgt vorzugsweise in einer Reinigungskammer, in der der Roboter die Zinkenbasis zumindest teilweise einführt. Während der Reinigung und/oder während einer auf die Reinigung folgenden Trocknung wird der mindestens eine Auflagezinken vorzugsweise gegenüber der Zinkenbasis verfahren.

### KURZBESCHREIBUNG DER ZEICHNUNGEN

Weitere Vorteile und Aspekte der Erfindung ergeben sich aus den Ansprüchen und aus der nachfolgenden Beschreibung eines bevorzugten Ausführungsbeispiels der Erfindung, das nachfolgend anhand der Figuren erläutert wird. Dabei zeigen:
- Fig. 1: einen erfindungsgemäßen Roboter während der Zuführung einer Zinkeneinheit zu einer Reinigungseinrichtung,
- Fig. 2: den Roboter der Fig. 1 während der Reinigung,
- Fig. 3A und 3B: eine Zinkeneinheit des Roboters und
- Fig. 4A bis Fig. 4C: die Reinigungseinrichtung mit eingeführter Zinkeneinheit in einer Seitendarstellung und in zwei in verschiedenen Schnittebenen angeordneten Schnittdarstellungen.

### DETAILLIERTE BESCHREIBUNG DER AUSFÜHRUNGSBEISPIELE

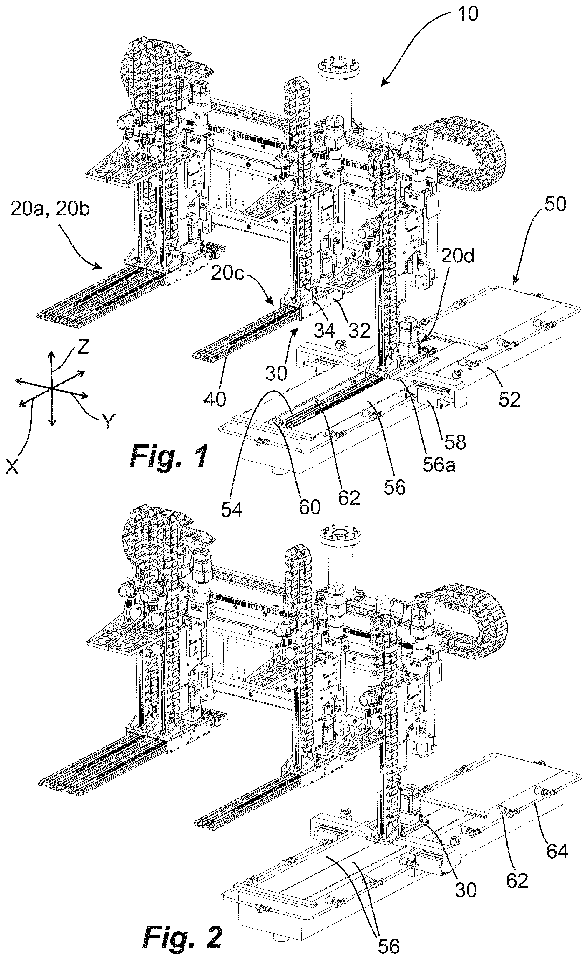

Fig. 1 zeigt einen Teil eines Roboters 10 zur Handhabung von Transportgütern mit dem Zweck, diese Transportgüter zu einer gemeinsamen Liefercharge zusammenzustellen.

Der Roboter 10 verfügt über eine Mehrzahl von Zinkeneinheiten 20a bis 20d. Jede Zinkeneinheit ist als Ganzes in Y-Richtung und in Z-Richtung verfahrbar.

Die Zinkeneinheiten verfügen jeweils über eine unmittelbar in Z-Richtung verfahrbare Zinkenbasis 30 und über einen demgegenüber in X-Richtung verfahrbaren Auflagezinken 40.

Mittels der Vielzahl von in allen drei Raumrichtungen verfahrbaren Auflagezinken 40 lässt sich auf vorteilhafte Weise das Zusammenstellen von Transportgütern realisieren. Hierbei kann es jedoch zu Beschädigungen von Transportgütern und, insbesondere im Falle zuckerhaltiger Getränke, zu Verschmutzungen des Roboters 10 kommen. Solche Verschmutzungen finden insbesondere an den Auflagezinken 40 und an der Zinkenbasis 30 statt. Insbesondere, wenn die Auflagezinken 40 in bereits verschmutzter Form in X-Richtung gegenüber der jeweiligen Zinkenbasis 30 verfahren werden, kommt es zu Verunreinigungen innerhalb des Außengehäuses 32 der Zinkenbasen 30.

Zur Beseitigung solcher Verunreinigungen ist eine Reinigungseinrichtung 50 vorgesehen. Diese verfügt über ein Gehäuse 52, an dessen Oberseite eine Zuführöffnung 54 vorgesehen ist. Zum Zwecke des Verschließens dieser Zuführöffnung sind zwei in Y-Richtung verfahrbare Schließelemente 56 vorgesehen, die mittels Motoren 58 automatisiert bewegbar sind. Die Schließelemente 56 weisen jeweils eine Aussparung 56a auf. Diese Aussparungen 56a bilden in der Schließstellung gemeinsam einen Freibereich, der an die Außenkontur der Zinkenbasen 30 angepasst ist.

Zum Zwecke des Reinigens einer Zinkeneinheit 20a bis 20d wird diese in der in Fig. 1 dargestellten Weise von oben in einen Reinigungsraum 60 der Reinigungseinrichtung 50 heruntergefahren. Anschließend werden mittels der Motoren 58 die Schließelemente 56 aufeinander zu verfahren, wobei sie den Reinigungsraum 60 weitgehend dicht verschließen. Zur Vermeidung austretender Reinigungsflüssigkeit sind an den Zinkenbasen 30 umlaufende Dichtnuten 34 vorgesehen, in die die Schließelemente 56 formschlüssig einfahren.

Fig. 2 zeigt den Roboter 10 während des Reinigungsvorgangs. Die Schließelemente 56 haben zusammen mit der Zinkenbasis 30 die Reinigungskammer 60 dicht verschlossen. Nun wird Reinigungsflüssigkeit durch Einströmöffnungen 62 in die Reinigungskammer 60 geleitet, wobei diese Einströmöffnung durch ein Leitungssystem 64 an der Außenseite der Reinigungseinrichtung 50 zugeführt wird.

Die besondere Ausgestaltung der Zinkeneinheiten 20a bis 20d zur Ermöglichung eines schnellen Reinigungsvorgangs wird anhand der weiteren Figuren erläutert.

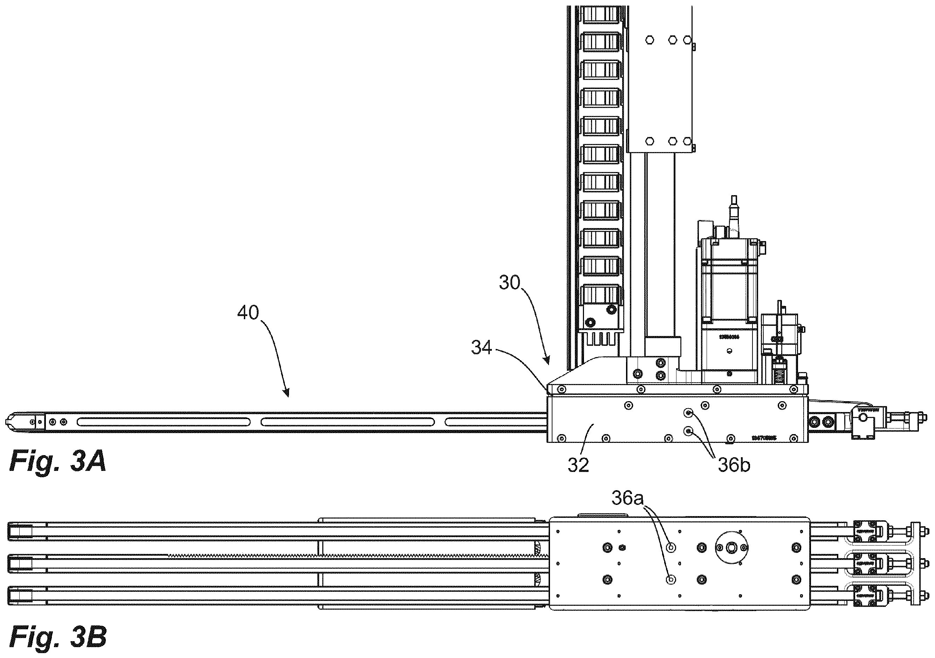

Die Fig. 3A und 3B zeigen eine Zinkeneinheit 20d in einer Seitenansicht und einer Ansicht von unten. Der Darstellung der Fig. 3A gut zu entnehmen ist die Dichtnut 34, in die die Schließelemente 56 beim Schließen des Reinigungsraums 60 einfahren. An der Unterseite des Gehäuses 32 der Zinkenbasis 30 sind zusätzlich zwei Eingangsöffnungen 36a vorgesehen. An der Seite des Gehäuses 32, die in Fig. 3A dargestellt ist, sind weitere Eingangsöffnungen 36b vorgesehen.

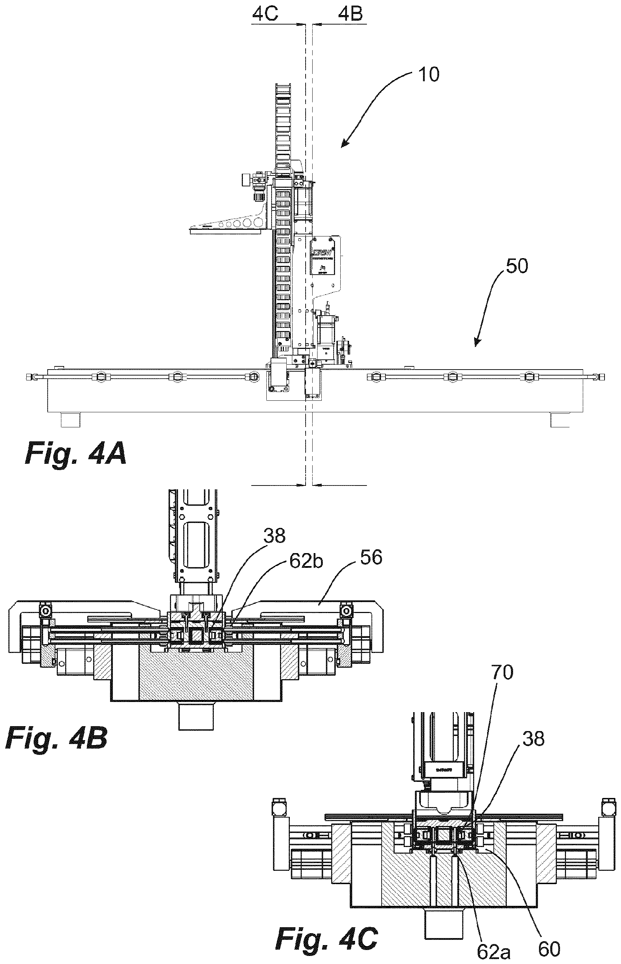

Fig. 4A zeigt den Roboter 10 und die Reinigungseinrichtung 50 in einer Seitenansicht. Beim Einfahren in den Reinigungsraum 60 sind die Auflagezinken 40 in der in Fig. 3A und 3B erkennbaren Weise in ihrer vorderen Endlage. Wie sich der Fig. 4A entnehmen lässt, weist die Reinigungseinrichtung 50 und der in ihr vorgesehene Reinigungsraum 60 eine Größe auf, die es gestattet, die Auflagezinken 40 bis in eine gegenüberliegende hintere Endlage zu verfahren, während die Reinigung stattfindet bzw. während einer Trocknung nach der Reinigung. In Fig. 4A sind zwei Schnittebenen 4B, 4C gekennzeichnet, zu denen korrespondierende Schnittdarstellungen in den Fig. 4B und 4C dargestellt sind. Fig. 4C verdeutlicht zwei Einströmöffnungen 62a, die an der unteren Seite des Reinigungsraums 60 vorgesehen sind. Wenn die Zinkeneinheit 20d in den Reinigungsraum 60 hineingefahren wird, legen sich diese beiden Einströmöffnungen 62a, die in nicht näher dargestellter Art und Weise mit umlaufenden Dichtungen versehenen sind, an die beiden Eingangsöffnungen 36a an, die in Fig. 3B dargestellt sind.

Weiterhin sind in der Fig. 4B entnehmbarer Weise auf beiden Seiten des Reinigungsraums 60 jeweils zwei Einströmöffnungen 62b vorgesehen, die zum Ankoppeln an die seitlichen Eingangsöffnungen 36b des Gehäuses 32 der Zinkenbasis 30 vorgesehen sind. Die Besonderheit hinsichtlich dieser Einströmöffnungen 62b liegt darin, dass diese ortsfest zu den Schließelementen 56 angebracht sind. Demzufolge werden sie gemeinsam mit den Schließelementen 56 bewegt, was bedeutet, dass sie im Zustand der Fig. 1, nach Einfahren der Zinkenbasis 30 und vor der Schließbewegung der Schließelemente 56, noch von den Eingangsöffnungen 36b beabstandet sind. Erst im Zuge des Verfahrens der Schließelemente 56 in die Schließstellung koppeln sie an die Eingangsöffnungen 36b an.

Gemeinsam wird durch die Koppelungen an den Eingangsöffnungen 36a und 36b erreicht, dass die Reinigungsflüssigkeit während des Reinigungsvorgangs unmittelbar in einen Innenraum 38 der Zinkenbasis 30 zugeführt werden kann und dort Verunreinigungen daher besonders gut beseitigt werden können. Gleichzeitig wird durch die anderen Zuströmöffnungen 62 eine Reinigung der Auflagezinken 40 bewirkt. Vorzugsweise werden diese während der Reinigung bewegt, um die Reinigungswirkung zu erhöhen. Aufgrund der Tatsache, dass die Auflagezinken 40 aufgrund der Länge des Reinigungsraums 60 von ihrer vorderen bis in ihre hintere Endlage bewegbar sind, kann insbesondere durch die unmittelbare Zuführung von Reinigungsflüssigkeit in den Innenraum 38 der Zinkenbasis 30 eine hohe Reinigungswirkung erzielt werden.

Die Reinigung wird vorzugsweise durch einen Trocknungsprozess abgeschlossen. Hierbei wird Luft durch einige oder alle Einströmöffnungen 62, 62a bis 62b in den Reinigungsraum 60 zugeführt, während insbesondere vorzugsweise eine fortgesetzte Bewegung der Auflagezinken 40 gegenüber der Zinkenbasis 30 stattfindet.

Die beschriebene Art der Reinigung kann bei einem erfindungsgemäßen Roboter regelmäßig und ohne Sensieren eines Verschmutzungszustandes stattfinden. Von Vorteil ist es jedoch, wenn ein solcher Verschmutzungszustand durch eine hierfür vorgesehene Sensorik detektiert wird. Zu diesem Zweck ist beim dargestellten Ausführungsbeispiel innerhalb der Zinkenbasis 30 ein Feuchtigkeitssensor 70 vorgesehen. Wenn der Ausgangswert dieses Feuchtigkeitssensors 70 einen vorgegebenen Schwellwert übersteigt, wird dies als Verunreinigung erkannt und der Reinigungsvorgang eingeleitet.

## Patentansprüche

1. Roboter (10) zur Handhabung von Transportgütern, insbesondere zur Zusammenstellung von Transportgütern zu einer gemeinsamen Liefercharge auf einer Palette, mit mindestens einer beweglichen Zinkeneinheit (20a-20d) mit
- mindestens einem Auflagezinken (40) und
- mindestens einer Zinkenbasis (30), gegenüber der der mindestens eine Auflagezinken (40) translativ verfahrbar ist,
- eine Reinigungseinrichtung (50)
- mit einer gegenüber einer Umgebung isolierbaren Reinigungskammer (60), die zur vollständigen Aufnahme des Auflagezinkens (40) und zur zumindest teilweisen Aufnahme der Zinkenbasis (30) ausgebildet ist,
- mit einer Zuführöffnung (54) zur zumindest teilweisen Einführung der Zinkeneinheit (20a-20d) in die Reinigungskammer (60) und
- mit mindestens einer in die Reinigungskammer (60) mündenden Einströmöffnung (62, 62a, 62b) für Reinigungsflüssigkeit,
**dadurch gekennzeichnet, dass**
die Zinkenbasis (30) ein Gehäuse (32) mit mindestens einer Eingangsöffnung (36a, 36b) aufweist, durch die hindurch Reinigungsflüssigkeit von außen in einen Innenraum (38) der Zinkenbasis (30) gelangen kann, wobei mindestens eine Einströmöffnungen (62a, 62b) der Reinigungskammer (60) derart angeordnet oder derart anordenbar ist, dass sie an die Eingangsöffnung (36a, 36b) der Zinkenbasis (30) ankoppelbar ist.

2. Roboter (10) nach Anspruch 1,
**dadurch gekennzeichnet, dass**
die Reinigungseinrichtung (50) über mindestens ein Schließelement (56) zum Verschließen der Zuführöffnung (54) verfügt, welches zwischen einer Öffnungsstellung und einer Schließstellung motorisch verfahrbar ist, wobei das mindestens eine Schließelement (56) in der Schließstellung vorzugsweise gemeinsam mit der Zinkenbasis (30) die Reinigungskammer (60) gegenüber der Umgebung isoliert.

3. Roboter (10) nach einem der vorstehenden Ansprüche,
**dadurch gekennzeichnet, dass**
die Einströmöffnung (62a, 62b), die zur Ankopplung an die Eingangsöffnung (36a, 36b) vorgesehen ist, gegenüber der Reinigungskammer (50) verfahrbar ist, wobei vorzugsweise die Einströmöffnung (62a, 62b) zur Schließeinheit (56) ortsfest ist und gemeinsam mit dieser gegenüber der Reinigungskammer (60) verfahrbar ist.

4. Roboter (10) nach einem der vorstehenden Ansprüche,
**dadurch gekennzeichnet, dass**
die Reinigungskammer (50) an die Zinkeneinheit (20a-20d) derart angepasst ist, dass der Auflagezinken (40) gegenüber der Zinkenbasis (30) innerhalb der Reinigungskammer (60) translativ verfahrbar ist, vorzugsweise zwischen einer hinteren und einer vorderen Endlage.

5. Roboter (10) nach einem der vorstehenden Ansprüche,
**dadurch gekennzeichnet, dass**
der Roboter (10) über eine Sensorik (70) verfügt, durch die unmittelbar oder mittelbar Feuchtigkeit erfassbar ist, wobei die Sensorik vorzugsweise einen Feuchtigkeitssensor im Bereich der Zinkeneinheit (20a-20d) und insbesondere vorzugsweise an der Zinkenbasis (30) aufweist.

6. Roboter (10) nach einem der vorstehenden Ansprüche,
**dadurch gekennzeichnet, dass**
die Reinigungseinrichtung (50) über eine Trocknungseinrichtung verfügt, wobei die Trocknungseinrichtung vorzugsweise zur Trocknung über einströmende Luft ausgebildet und wobei die Reinigungseinrichtung insbesondere vorzugsweise zur Zuführung von Luft durch Einströmöffnungen (62, 62a, 62b) ausgebildet ist, durch die wahlweise Reinigungsflüssigkeit oder Luft zugeführt werden kann.

7. Reinigungseinrichtung (50) für einen Roboter (10) nach einem der vorstehenden Ansprüche,
wobei die Reinigungseinrichtung (50) umfasst:
- eine gegenüber einer Umgebung isolierbaren Reinigungskammer (60), die zur vollständigen Aufnahme des Auflagezinkens (40) und zur zumindest teilweisen Aufnahme der Zinkenbasis (30) ausgebildet ist,
- eine Zuführöffnung (54) zur zumindest teilweisen Einführung der Zinkeneinheit (20a-20d) in die Reinigungskammer (60) und
- mindestens eine in die Reinigungskammer (60) mündenden Einströmöffnung (62, 62a, 62b) für Reinigungsflüssigkeit,
**dadurch gekennzeichnet, dass**
- mindestens eine der Einströmöffnungen (62a, 62b) gegenüber der Reinigungskammer (60) verfahrbar ist.

8. Reinigungseinrichtung (50) nach Anspruch 7,
**dadurch gekennzeichnet, dass**
die Reinigungseinrichtung (50) über mindestens ein Schließelement (56) zum Verschließen der Zuführöffnung (54) verfügbar ist, welches zwischen einer Öffnungsstellung und einer Schließstellung motorisch verfahrbar ist.

9. Reinigungseinrichtung (50) nach Anspruch 8,
**dadurch gekennzeichnet, dass**
die Einströmöffnung (62a, 62b) zur Schließeinheit (56) ortsfest ist und gemeinsam mit dieser gegenüber der Reinigungskammer (50) verfahrbar ist.

10. Verfahren zum Reinigen einer beweglichen Zinkeneinheit (20a-20d) eines Roboters (10) mit mindestens einem Auflagezinken (40) und mindestens einer Zinkenbasis (30), gegenüber der der mindestens eine Auflagezinken (40) translativ verfahrbar ist, **dadurch gekennzeichnet, dass**
- die Reinigung durch eine Fluidverbindung (62a, 62b, 36a, 36b) erfolgt, die beim oder nach Einführen der Zinkeneinheit (20a, 20d) in eine Reinigungskammer (60) zwischen einer Einströmöffnung (62a, 62b) der Reinigungskammer (60) und einer Eingangsöffnung (36a, 36b) der Zinkenbasis (30) geschaffen wird.

11. Verfahren nach Anspruch 10,
**dadurch gekennzeichnet, dass**
- die Reinigung in der Reinigungskammer (60) erfolgt, in die der Roboter (10) die Zinkenbasis zumindest teilweise einführt und/oder
- während der Reinigung und/oder während einer auf die Reinigung folgenden Trocknung der Auflagezinken (40) gegenüber der Zinkenbasis (30) verfahren wird.

## Claims

1. Robot (10) for handling goods in transit, in particular for combining goods in transit to form a common delivery batch on a pallet, comprising at least one movable fork unit (20a-20d) having
- at least one load-bearing fork (40) and
- at least one fork base (30), relative to which the at least one load-bearing fork (40) can be moved translationally,
- a cleaning device (50)
- which is designed with a cleaning chamber (60) which can be isolated from the surroundings, and which is designed to completely accommodate the load-bearing fork (40) and at least partly accommodate the fork base (30),
- having an access opening (54) for the at least partial introduction of the fork unit (20a-20d) into the cleaning chamber (60), and
- having at least one inflow opening (62, 62a, 62b) for cleaning liquid, which opens into the cleaning chamber (60),
**characterized in that**
the fork base (30) has a housing (32) with at least one inlet opening (36a, 36b), through which cleaning liquid from outside can reach an interior (38) of the fork base (30), wherein at least one inflow opening (62a, 62b) of the cleaning chamber (60) is or can be arranged in such a way that it can be coupled to the inlet opening (36a, 36b) of the fork base (30).

2. Robot (10) according to Claim 1,
**characterized in that**
the cleaning device (50) has at least one closing element (56) for closing the access opening (54), which is movable between an open position and a closed position by a motor, wherein, in the closed position, the at least one closing element (56) isolates the cleaning chamber (60) from the surroundings, preferably together with the fork base (30) .

3. Robot (10) according to either of the preceding claims,
**characterized in that**
the inflow opening (62a, 62b) which is provided for coupling to the inlet opening (36a, 36b) can be moved relative to the cleaning chamber (50), wherein the inflow opening (62a, 62b) is preferably in a fixed location relative to the closing unit (56), and, together with the latter, can be moved relative to the cleaning chamber (60).

4. Robot (10) according to one of the preceding claims,
**characterized in that**
the cleaning chamber (50) is matched to the fork unit (20a-20d) in such a way that the load-bearing fork (40) can be moved translationally relative to the fork base (30) within the cleaning chamber (60), preferably between a rear and a front end position.

5. Robot (10) according to one of the preceding claims,
**characterized in that**
the robot (10) has sensors (70), by means of which moisture can be detected directly or indirectly, wherein the sensors preferably have a moisture sensor in the region of the fork unit (20a-20d) and in particular preferably on the fork base (30).

6. Robot (10) according to one of the preceding claims,
**characterized in that**
the cleaning device (50) has a drying device, wherein the drying device is preferably designed for drying via inflowing air, and wherein the cleaning device is in particular preferably designed for feeding air in through inflow openings (62, 62a, 62b), through which cleaning liquid or air can optionally be fed in.

7. Cleaning device (50) for a robot (10) according to one of the preceding claims,
wherein
the cleaning device (50) comprises
- a cleaning chamber (60) that can be isolated from the surroundings, which is designed to completely accommodate the load-bearing fork (40) and at least partly accommodate the fork base (30),
- a feed opening (54) for the at least partial introduction of the fork unit (20a-20d) into the cleaning chamber (60), and
- at least one inflow opening (62, 62a, 62b) for cleaning liquid, which opens into the cleaning chamber (60),
**characterized in that**
at least one of the inflow openings (62a, 62b) can be moved relative to the cleaning chamber (60).

8. Cleaning device (50) according to Claim 7,
**characterized in that**
the cleaning device (50) can have at least one closing element (56) for closing the access opening (54), which can be moved between an open position and a closed position by a motor.

9. Cleaning device (50) according to Claim 8,
**characterized in that**
the inflow opening (62a, 62b) is in a fixed location relative to the closing unit (56) and, together with the latter, can be moved relative to the cleaning chamber (50).

10. Method for cleaning a movable fork unit (20a-20d) of a robot (10) having at least one load-bearing fork (40) and at least one fork base (30), relative to which the at least one load-bearing fork (40) can be moved translationally,
**characterized in that**
- the cleaning is carried out via a fluid connection (62a, 62b, 36a, 36b) which, during or after the introduction of the fork unit (20a, 20d) into a cleaning chamber (60) is created between an inflow opening (62a, 62b) of the cleaning chamber (60) and an inlet opening (36a, 36b) of the fork base (30).

11. Method according to Claim 10,
**characterized in that**
- the cleaning is carried out in the cleaning chamber (60), into which the robot (10) at least partly introduces the fork base, and/or
- during the cleaning and/or during drying following the cleaning, the load-bearing fork (40) is moved relative to the fork base (30).

## Revendications

1. Robot (10) pour la manutention de marchandises pendant le transport, en particulier pour assembler des marchandises en un lot de livraison commun sur une palette, avec au moins une unité à dents mobile (20a à 20d) avec
- au moins une dent de support (40) et
- au moins une base de dents (30) contre laquelle la ou les dents de support (40) sont mobiles en translation,
- un dispositif de nettoyage (50)
- avec une chambre de nettoyage (60) qui peut être isolée d'un environnement et qui est conçue pour recevoir complètement la dent de support (40) et pour recevoir au moins partiellement la base de dents (30),
- avec une ouverture d'alimentation (54) pour introduire au moins partiellement l'unité à dents (20a à 20d) dans la chambre de nettoyage (60) et au moins une dans la chambre de nettoyage (60) débouchant dans l'ouverture d'entrée (62, 62a, 62b) pour le liquide de nettoyage,
**caractérisé en ce que**
la base de dents (30) présente un logement (32) avec au moins une ouverture d'entrée (36a, 36b) à travers laquelle le fluide de nettoyage peut passer de l'extérieur dans un espace intérieur (38) de la base de dents (30), dans lequel au moins une ouverture d'entrée (62a, 62b) de la chambre de nettoyage (60) est agencée ou peut être agencée de telle manière qu'elle puisse être couplée à l'ouverture d'entrée (36a, 36b) de la base de dents (30).

2. Robot (10) selon la revendication 1,
**caractérisé en ce que**
le dispositif de nettoyage (50) comporte au moins un élément de fermeture (56) pour fermer l'ouverture d'alimentation (54) mobile entre une position ouverte et une position fermée, dans lequel le ou les éléments de fermeture (56) dans la position de fermeture, de préférence en coopération avec la base à dents (30), séparent la chambre de nettoyage (60) de l'environnement.

3. Robot (10) selon une des revendications précédentes,
**caractérisé en ce que**
l'ouverture d'aspiration (62a, 62b) prévue pour être couplée à l'ouverture d'entrée (36a, 36b) est mobile par rapport à la chambre de nettoyage (50), dans lequel, de préférence, l'ouverture d'aspiration (62a, 62b) est fixe par rapport à l'unité de fermeture (56) et mobile conjointement avec celle-ci par rapport à la chambre de nettoyage (60).

4. Robot (10) selon une des revendications précédentes,
**caractérisé en ce que**
la chambre de nettoyage (50) est adaptée à l'unité à dents (20a-20d) de sorte que la dent de support (40) puisse être déplacée en translation par rapport à la base de dents (30) à l'intérieur de la chambre de nettoyage (60).

5. Robot (10) selon une des revendications précédentes,
**caractérisé en ce que**
le robot (10) possède un système de détection (70) à travers lequel de l'humidité peut être détectée, directement ou indirectement, dans lequel le capteur comporte de préférence un capteur d'humidité dans la région de l'unité à dents (20a à 20d) et en particulier de préférence sur la base de dents (30).

6. Robot (10) selon une des revendications précédentes,
**caractérisé en ce que**
le dispositif de nettoyage (50) dispose d'un dispositif de séchage, dans lequel le dispositif de séchage est de préférence conçu pour sécher en utilisant l'air entrant et dans lequel le dispositif de nettoyage est en particulier de préférence conçu pour fournir de l'air à travers des ouvertures d'entrée (62, 62a, 62b) à travers lesquelles au choix un liquide ou l'air de nettoyage peut être fourni.

7. Dispositif de nettoyage (50) pour un robot (10) selon une des revendications précédentes,
dans lequel le dispositif de nettoyage (50) comprend :
- une chambre de nettoyage (60) qui peut être isolée d'un environnement et qui est conçue pour recevoir complètement la dent de support (40) et pour recevoir au moins partiellement la base de dents (30),
- une ouverture d'alimentation (54) pour introduire au moins partiellement l'unité à dents (20a-20d) dans la chambre de nettoyage (60) et
au moins une ouverture d'entrée (62, 62a, 62b) pour nettoyer le fluide débouchant dans la chambre de nettoyage (60),
**caractérisé en ce que**
au moins l'une des ouvertures d'entrée (62a, 62b) peut être déplacée par rapport à la chambre de nettoyage (60).

8. Dispositif de nettoyage (50) selon la revendication 7,
**caractérisé en ce que**
le dispositif de nettoyage (50) peut disposer d'au moins un élément de fermeture (56) pour fermer l'ouverture d'alimentation (54) mobile sur actionnement par moteur entre une position ouverte et une position fermée.

9. Dispositif de nettoyage (50) selon la revendication 8,
**caractérisé en ce que**
l'ouverture d'aspiration (62a, 62b) est fixe par rapport à l'unité de fermeture (56) et mobile conjointement avec celle-ci par rapport à la chambre de nettoyage (50).

10. Procédé de nettoyage d'une unité à dents mobile (20a-20d) d'un robot (10)
avec au moins une dent de support (40) et au moins une base de dents (30) contre lesquelles la ou les dents de support (40) peuvent être déplacées en translation,
**caractérisé en ce que**
- le nettoyage par raccordement de fluide (62a, 62b, 36a, 36b) a lieu pendant ou après l'introduction de l'unité à dents (20a, 20d) dans une chambre de nettoyage (60) entre une ouverture d'aspiration (62a, 62b) de la chambre de nettoyage (60) et une ouverture d'entrée (36a, 36b) de la base de dents (30).

11. Procédé selon la revendication 10,
**caractérisé en ce que**
- dans la chambre de nettoyage (60) a lieu le nettoyage, dans lequel le robot (10) introduit au moins partiellement la base de dents et/ou
- pendant le nettoyage et/ou pendant le séchage qui suit le nettoyage ultérieur, les dents de support (40) sont déplacées par rapport à la base de dents (30).
